# EUROPEAN PATENT SPECIFICATION

(11) **EP 3 079 328 B1**
(45) Date of publication and mention of the grant of the patent: **05.06.2019**
(21) Application number: 14867542.4
(22) Date of filing: 23.06.2014
(51) Int. Cl.: H04L 29/06, H04L 29/08, H04L 29/12

(54) **MEDIA RESOURCE SHARING METHOD, SHARED SERVER AND SHARED SYSTEM**
VERFAHREN ZUR GEMEINSAMEN NUTZUNG VON MEDIENRESSOURCEN, GEMEINSAMER SERVER UND GEMEINSAMES SYSTEM
PROCÉDÉ DE PARTAGE D'UNE RESSOURCE MULTIMÉDIA, SERVEUR PARTAGÉ ET SYSTÈME PARTAGÉ

(30) Priority: 05.12.2013 CN 201310653199
(43) Date of publication of application: 12.10.2016
(73) Proprietor: ZTE Corporation, Shenzhen, Guangdong 518057 (CN)
(72) Inventor: WANG, Wei, Shenzhen Guangdong 518057 (CN); LI, Congbing, Shenzhen Guangdong 518057 (CN)
(74) Representative: Deambrogi, Edgardo
(86) International application number: PCT/CN2014/080547
(87) International publication number: WO 2015/081691

(56) References cited:
- WO-A1-2013/107504
- CN-A- 1 968 226
- CN-A- 102 457 580
- US-A1- 2010 217 874
- US-B1- 8 601 144

## Description

### Technical Field

The present disclosure relates to the technical field of communications, and in particular to a media resource sharing method, server and system.

### Background

With the development of network technologies, a variety of implementation methods for sharing media resources between two network devices have been proposed. Media resources shared by a user may include text contents, pictures, videos and the like. These media resources are usually stored on a mobile phone, a computer or other network devices of the user. These network devices are within a local area network and do not have fixed external network Internet Protocol (IP) addresses. When it is necessary to access these network devices from external of the local area network, a Network Address Translation (NAT) traversal mode or a server relaying mode is adopted generally.

However, when a media resource with a larger data volume is shared in the server relaying mode, the occupation of a server resource will be relatively high, and the number of the network devices which can be simultaneously served by a single server is decreased, thereby causing the increase of the cost of the server.

When the NAT traversal mode is adopted, the media resources are usually shared by User Datagram Protocol (UDP) hole-punching, which is required to be completed by a dedicated client. Namely, when the media resources are shared, it is necessary to use the dedicated client to browse the media resources, thereby causing limitations to the network devices sharing the media resources. The application range is relatively small.

US 8,601,144 B1 and US 2010/217874 A1 provide respective technical solutions; however, the above mentioned problem still remains unsolved.

### Summary

The embodiments of the present disclosure provide a media resource sharing method, as further defined in claim 1 and a server, as further defined in claim 7, which are intended to improve the universality of sharing media resources between a server and a browser, reduce the cost and save network resources.

In an exemplary embodiment, the step that the address information of the sharing server and the address information of the browser are acquired according to the sharing request may include that:
a request response message is returned to an application server via the bidirectional channel according to the sharing request, and the application server forwards the request response message to the browser via the bidirectional channel;
an NAT address and port of the browser acquired via the application server, and an NAT address and port of the sharing server are received; and
the NAT address and port of the sharing server is sent to the browser via the bidirectional channel.

In an exemplary embodiment, the step that the ICE connectivity test is performed with the browser according to the acquired address information of the sharing server and the acquired address information of the browser and the first media channel is established may include that:
the ICE connectivity test is performed with the browser according to the acquired NAT address and port of the sharing server and the acquired NAT address and port of the browser, and the first media channel is established.

In an exemplary embodiment, after the ICE connectivity test is performed with the browser according to the acquired address information of the sharing server and the acquired address information of the browser and the first media channel is established, the method may further include that:
when the first media channel is established unsuccessfully, a second media channel is established with the browser by taking the application server as a relay; and
the media resources are shared with the browser via the second media channel.

In an exemplary embodiment, the step that the sharing server acquires the sharing request from the browser via the bidirectional channel may include that:
a bidirectional channel is respectively established with the application server by the sharing server and the browser; and
the sharing request from the browser is acquired via the bidirectional channel respectively established by the sharing server and the browser with the application server.

In an exemplary embodiment, the step that the media resources are shared with the browser via the first media channel may include that: the media resources are sent to the browser via the first medial channel, or the media resources sent by the browser are received via the first media channel.

In an exemplary embodiment, the address information acquisition component may include:
a return unit, configured to return a request response message to an application server via the bidirectional channel according to the sharing request, so that the application server forward the request response message to the browser via the bidirectional channel;
a receiving unit, configured to receive an NAT address and port of the browser acquired via the application server, and an NAT address and port of the sharing server; and
a sending unit, configured to send the NAT address and port of the sharing server to the browser via the bidirectional channel.

In an exemplary embodiment, the first establishment component may be configured to perform the ICE connectivity test with the browser according to the acquired NAT address and port of the sharing server and the acquired NAT address and port of the browser, and establish the first media channel.

In an exemplary embodiment, the media resource sharing server may further include:
a second establishment component, configured to establish, when the first media channel is established unsuccessfully, a second media channel with the browser by taking the application server as a relay; and
a second sharing component, configured to share the media resources with the browser via the second media channel.

In an exemplary embodiment, the request acquisition component may include:
a channel establishment unit, configured to establish a bidirectional channel between the sharing server and the application server and a bidirectional channel between the browser and the application server; and
a request acquisition unit, configured to acquire the sharing request from the browser via the bidirectional channel established between the sharing server and the application server and the bidirectional channel established between the browser and the application server.

In an exemplary embodiment, the first sharing component may be configured to send the media resources to the browser via the first medial channel or receive the media resources sent by the browser via the first media channel.

According to another aspect of the embodiments of the present disclosure, a media resource sharing system is also provided, which may include an application server, a browser and the sharing server, wherein
the application server may be configured to send address information to the sharing server and the browser according to a sharing request; and the browser may be configured to send the sharing request to the sharing server via a bidirectional channel, may be further configured to cooperate with the sharing server to perform an ICE connectivity test and establish a first media channel, and may be further configured to share media resources with the sharing server via the first media channel.

In an exemplary embodiment, the application server may include a register server and an ICE server.

By means of the media resource sharing method, server and system provided by the embodiments of the present disclosure, the browser supports a Web Real-Time Communication (RTC) standard, the sharing server and the browser can perform message interaction via the bidirectional channel established with the application server, after the sharing server and the browser acquire their own address information and the address information of the opposite party, the ICE connectivity test can be performed and the first media channel can be established, and the media resources can be shared between the sharing server and the browser via the first media channel. As a lot of browsers support the Web RTC standard, compared with the related art in which an NAT traversal mode is adopted, the embodiments of the present disclosure have the advantages that the application range of resource sharing between the server and the browser is expanded, and it is unnecessary to use a dedicated client to complete resource sharing; and compared with a server relaying mode, the embodiments of the present disclosure occupy few resources of the application server when a media resource with a larger data volume is shared, reduces the cost, and saves network resources.

### Brief Description of the Drawings

Fig. 1 is a flow diagram of a media resource sharing method according to a first embodiment of the present disclosure;
Fig. 2 is a flow diagram of a media resource sharing method according to a second embodiment of the present disclosure;
Fig. 3 is a flow diagram of acquisition of address information of a sharing server and address information of a browser shown in Fig. 2;
Fig. 4 is a flow diagram of acquisition of a sharing request from a browser via a bidirectional channel shown in Fig. 2;
Fig. 5 is a structural diagram of a sharing server according to a first embodiment of the present disclosure;
Fig. 6 is a structural diagram of a sharing server according to a second embodiment of the present disclosure;
Fig. 7 is a structural diagram of a request acquisition component shown in Fig. 6;
Fig. 8 is a structural diagram of an address information acquisition component shown in Fig. 6; and
Fig. 9 is a structural diagram of a sharing system according to an embodiment of the present disclosure.

In order to make the technical solutions of the present disclosure clearer, detailed descriptions will be made below with reference to the drawings.

### Detailed Description of the Embodiments

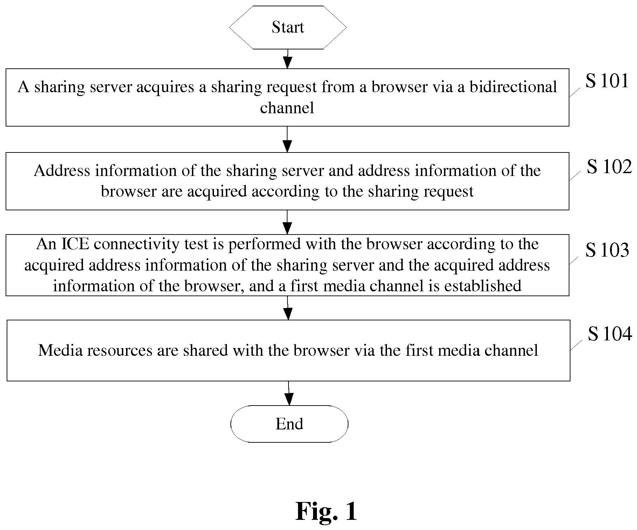

Specifically, as shown in Fig. 1, according to an embodiment of the present disclosure, a media resource sharing method is provided, which may include the steps as follows.

Step S101: A sharing server acquires a sharing request from a browser via a bidirectional channel,
wherein the bidirectional channel is a Web Socket channel.

The browser in the embodiment supports a Web RTC standard. Web RTC is a technology for supporting the browser to make a real-time voice conversation or a video conversation. The sharing server and a device installed with the browser are within different local area networks, and when the sharing server or the browser accesses the opposite party by serving as an external network, an NAT device is needed to translate a network address and shield information of an internal network. In the embodiment, the sharing request from the browser is acquired via the bidirectional channel established with an application server by the sharing server and the browser respectively. A Web Socket specification aims to achieve bidirectional communication between the browser and the server. The browser having the Web Socket specification may include Firefox 4, Chrome 4, Opera 10.70, Safari 5 and other browsers.

Step S102: Address information of the sharing server and address information of the browser are acquired according to the sharing request.

In the embodiment, after the sharing server receives the sharing request, a response message of the sharing request is returned to the browser by taking the application server as a relay, after receiving the response message, the browser acquires the address information thereof from the application server, and then the sharing server acquires the address information thereof from the application server.

The sharing server acquires their own address information and the address information of the browser via the application server, the browser acquires its own address information and the address information of the sharing server via the application server, and a subsequent ICE connectivity test can be performed by means of the known own address information of the opposite party.

In this embodiment, each piece of address information may include an NAT address and port, and may further include an IP address and port of a relay. The NAT address and port is allocated to the respective NAT device of the sharing server and the browser and then is sent to the application server, and the IP address and port of the relay is allocated by the application server. In the embodiment, the NAT address and port is preferred.

Step S103: An ICE connectivity test is performed with the browser according to the acquired address information of the sharing server and the acquired address information of the browser, and a first media channel is established.

ICE is a comprehensive NAT traversal technology, which is commonly used in NAT traversal.

The ICE connectivity test may be performed on the sharing server and the browser only by means of the known own address information and the address information of the opposite party, and the first media channel may be established. Each piece of address information used in the embodiment may include the NAT address and the port.

Step S104: Media resources are shared with the browser via the first media channel.

The sharing server and the browser share the media resources including text contents, pictures, videos and the like via the first media channel, the media resources are packaged into a UDP packet before being sent, and then the UDP packet is sent. The media resources may be sent to the browser by the sharing server via the first medial channel, or the media resources sent by the browser may be received by the sharing server via the first media channel and may be saved on the sharing server.

Compared with the related art, the embodiment has the advantages that the browser supports the Web RTC standard, the sharing server and the browser can perform message interaction via the bidirectional channel established with the application server, after the sharing server and the browser acquire their own address information and the address information of the opposite party, the ICE connectivity test can be performed and the first media channel can be established, and the media resources can be shared between the sharing server and the browser via the first media channel. As a lot of browsers support the Web RTC standard, compared with the related art in which an NAT traversal mode is adopted, the embodiment has the advantages that the application range of resource sharing between the server and the browser is expanded, and it is unnecessary to use a dedicated client to complete resource sharing; and compared with a server relaying mode, the embodiment occupies few resources of the application server when a media resource with a larger data volume is shared, reduces the cost, and saves network resources.

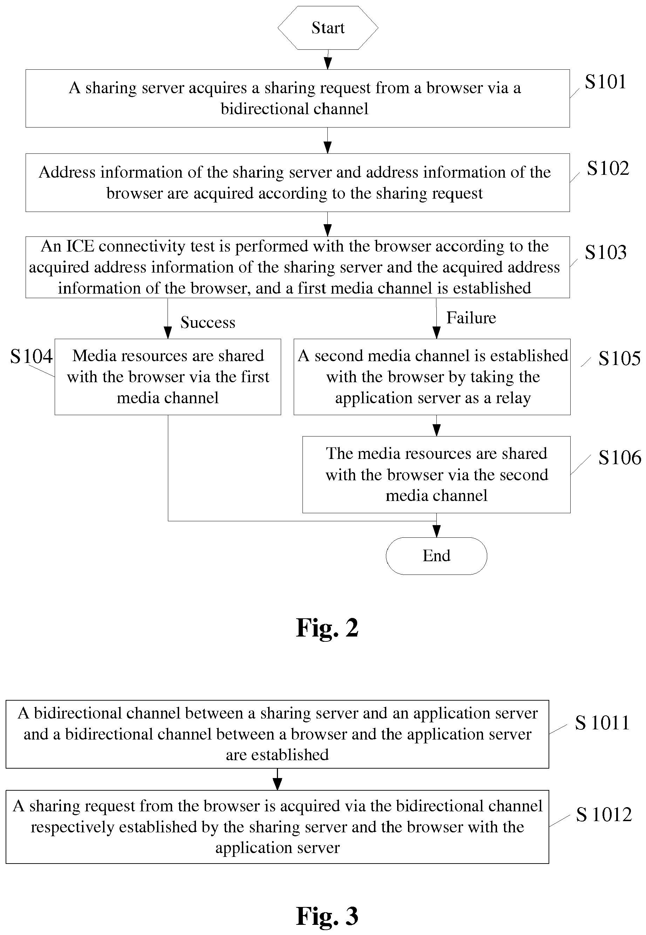

In an exemplary embodiment, as shown in Fig. 2, according to another embodiment of the present disclosure, a media resource sharing method is provided. On the basis of the above embodiment, after Step S102 is executed, the method may further include that:
Step S105: When the first media channel is established unsuccessfully, a second media channel is established with the browser by taking the application server as a relay.
Step S106: The media resources are shared with the browser via the second media channel.

On the basis of the above embodiment, the embodiment further solves the problem that when the first media channel between the sharing server and the browser is established unsuccessfully, as the address information acquired by the sharing server and the browser via the application server may include the IP address and port of the relay, the second media channel with the browser can be still established by taking the application server as the relay. Moreover, the media resources can be shared with the browser, thereby ensuring normal communication between the sharing server and the browser.

In an exemplary embodiment, as shown in Fig. 3, Step S101 that the sharing server acquires the sharing request from the browser via the bidirectional channel may include the steps as follows.
Step S1011: A bidirectional channel is respectively established with the application server by the sharing server and the browser.
Step S1012: The sharing request from the browser is acquired via the bidirectional channel respectively established by the sharing server and the browser with the application server.

The embodiment specifically refers to that: the sharing server and the application server perform Web Socket handshaking and establish the bidirectional channel, in order to achieve bidirectional communication between the sharing server and the application server; the sharing server reports an own state, namely an available state or a non-available state, to the application server; the browser has access to a page for querying a sharing service list provided by the application server and loads the page, and the browser and the application server perform Web Socket handshaking and establish the bidirectional channel, in order to achieve bidirectional communication between the browser and the application server; and the browser sends the sharing request to the application server via the bidirectional channel, and the application server forwards the sharing request from the browser to the sharing server via the bidirectional channel.

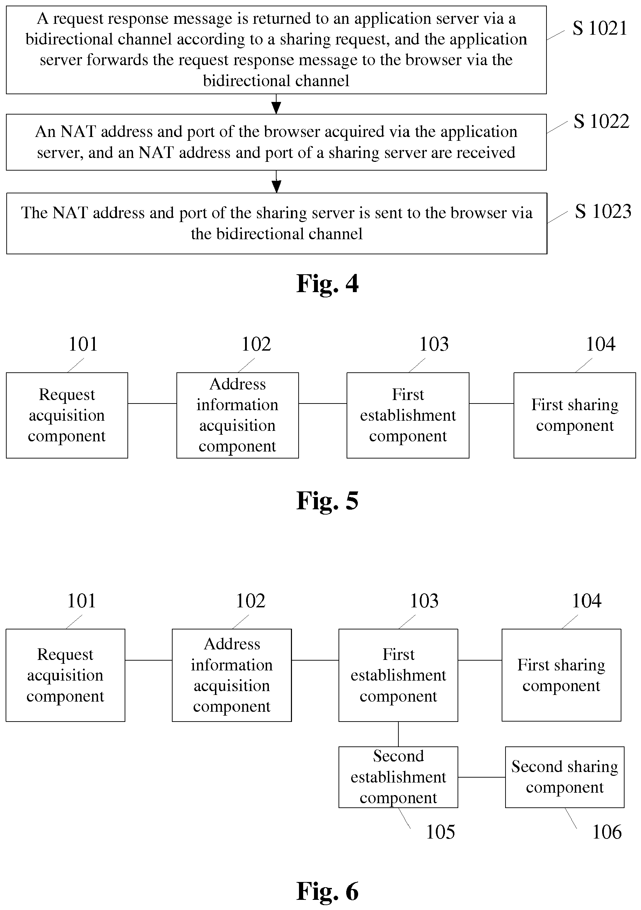

In an exemplary embodiment, as shown in Fig. 4, Step S102 that the address information of the sharing server and the address information of the browser are acquired according to the sharing request may include the steps as follows.
Step S1021: A request response message is returned to an application server via the bidirectional channel according to the sharing request, and the application server forwards the request response message to the browser via the bidirectional channel.
Step S1022: An NAT address and port of the browser acquired via the application server, and an NAT address and port of the sharing server are received.
Step S1023: The NAT address and port of the sharing server is sent to the browser via the bidirectional channel.

As shown in Fig. 5, according to an embodiment of the present disclosure, a sharing server is provided, which includes:
a request acquisition component 101, configured to acquire a sharing request from a browser via a bidirectional channel.

The browser in the embodiment supports a Web RTC standard, and Web RTC is a technology for supporting the browser to make a real-time voice conversation or a video conversation. The sharing server and a device installed with the browser are within different local area networks, and when the sharing server or the browser accesses the opposite party by serving as an external network, an NAT device is needed to translate a network address and shield information of an internal network. In the embodiment, the sharing request from the browser is acquired via the bidirectional channel established with an application server by the sharing server and the browser respectively. A Web Socket specification aims to achieve bidirectional communication between the browser and the server, and the browser having the Web Socket specification may include Firefox 4, Chrome 4, Opera 10.70, Safari 5 and other browsers.

An address information acquisition component 102, configured to acquire address information of the sharing server and address information of the browser according to the sharing request.

In the embodiment, after the sharing request is received, a response message of the sharing request is returned to the browser by taking the application server as a relay, after receiving the response message, the browser acquires the address information thereof from the application server, and then the sharing server acquires the address information thereof from the application server.

The address information acquisition component 102 of the sharing server acquires its own address information and the address information of the browser via the application server, the browser acquires its own address information and the address information of the sharing server via the application server, and an ICE connectivity test can be performed by means of the known own address information of the opposite party.

In this embodiment, each piece of address information may include an NAT address and port, and may further include an IP address and port of a relay, the NAT address and port is allocated to the respective NAT device of the sharing server and the browser and then is sent to the application server, and the IP address and port of the relay is allocated by the application server. In the embodiment, the NAT address and port is preferred.

A first establishment component 103, configured to perform an ICE connectivity test with the browser according to the acquired address information of the sharing server and the acquired address information of the browser, and establish a first media channel.

ICE is a comprehensive NAT traversal technology, which is commonly used in NAT traversal.

The ICE connectivity test may be performed on the first establishment component 103 of the sharing server and the browser only by means of the known own address information and the address information of the opposite party, and the first media channel may be established. Each piece of address information used in the embodiment may include the NAT address and the port.

A first sharing component 104, configured to share media resources with the browser via the first media channel.

The first sharing component 104 of the sharing server and the browser share the media resources including text contents, pictures, videos and the like via the first media channel. The media resources may be sent to the browser by the first sharing component 104 of the sharing server via the first medial channel, or the media resources sent by the browser may be received by the first sharing component 104 of the sharing server via the first media channel and may be saved on the sharing server.

As shown in Fig. 6, according to another embodiment of the present disclosure, a sharing server is provided. On the basis of the embodiment in Fig. 5, the sharing server may further include:
a second establishment component 105, configured to establish, when the first media channel is established unsuccessfully, a second media channel with the browser by taking the application server as a relay; and
a second sharing component 106, configured to share the media resources with the browser via the second media channel.

On the basis of the above embodiment, the embodiment further solves the problems that when the first media channel between the first establishment component 102 of the sharing server and the browser is established unsuccessfully, as the address information acquired by the sharing server and the browser via the application server may include the IP address and port of the relay, the second media channel between the second establishment component 104 of the sharing server and the browser can be still established by taking the application server as the relay and the media resources can be shared with the browser, thereby ensuring normal communication between the sharing server and the browser.

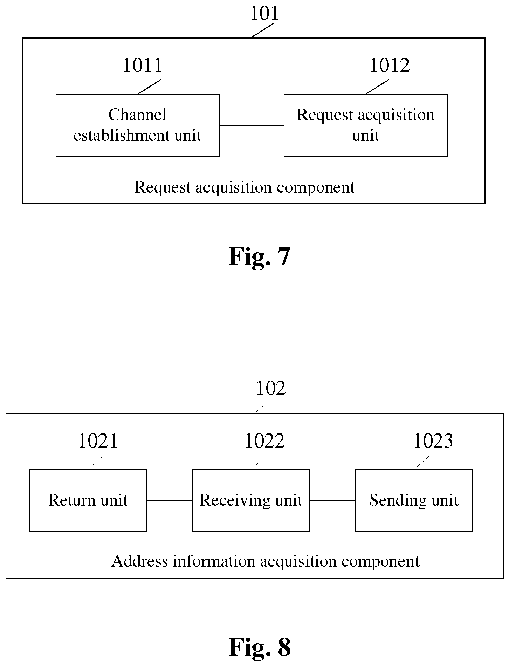

In an exemplary embodiment, as shown in Fig. 7, the request acquisition component 101 may include:
a channel establishment unit 1011, configured to respectively establish, by the sharing server and the browser, a bidirectional channel with the application server; and
a request acquisition unit 1012, configured to acquire the sharing request from the browser via the bidirectional channel respectively established by the sharing server and the browser with the application server.

In an exemplary embodiment, as shown in Fig. 8, the address information acquisition component 102 may include:
a return unit 1021, configured to return a request response message to an application server via the bidirectional channel according to the sharing request, so that the application server forward the request response message to the browser via the bidirectional channel;
a receiving unit 1022, configured to receive an NAT address and port of the browser acquired via the application server, and an NAT address and port of the sharing server; and
a sending unit 1023, configured to send the NAT address and port of the sharing server to the browser via the bidirectional channel.

According to an embodiment of the present disclosure, a sharing system is provided, which includes: an application server, a browser and a sharing server, wherein
the sharing server is configured to acquire a sharing request from a browser via a bidirectional channel, acquire address information of the sharing server and address information of the browser, perform an ICE connectivity test with the browser according to the acquired address information of the sharing server and the acquired address information of the browser and establish a first media channel, and share media resources with the browser via the first media channel;
the application server is configured to send address information to the sharing server and the browser according to a sharing request; and
the browser is configured to send the sharing request to the sharing server via the bidirectional channel, is further configured to cooperate with the sharing server to perform the ICE connectivity test and establish the first media channel, and is further configured to share the media resources with the sharing server via the first media channel.

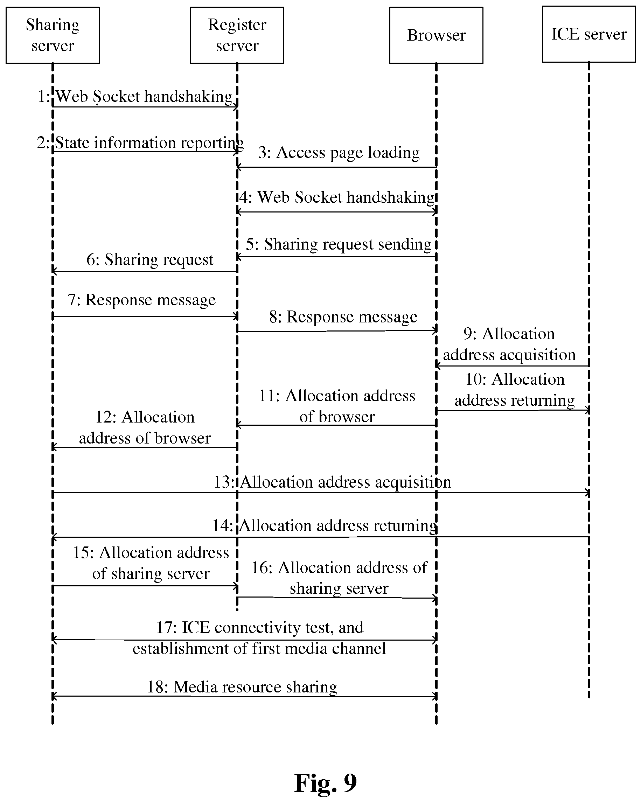

In an exemplary embodiment, as shown in Fig. 9, in order to reduce the burden of the application server and improve the efficiency, the application server can be divided into two servers namely a register server and an ICE server. The register server is configured to register external access addresses of the sharing server and the browser, subjected to NAT of the respective NAT devices, and the register server is taken as a relay server for message interaction between the sharing server and the browser. The ICE server is in charge of allocating the respective address information of the sharing server and the browser, and is taken as a relay server for sharing interaction of the media resources after the second media channel is established between the sharing server and the browser. Namely, a content sharing server and the browser perform real-time audio/video communication by simulating browser RTC Peer Connection of the Web RTC standard, ICE and media stream processing flows and messages, so as to share a video.

Detailed descriptions are made below by taking division of the application server into the register server and the ICE server.
1: The sharing server and the register server perform Web Socket handshaking and establish a bidirectional channel.
2: The sharing server reports state information to the register server.
3: The browser has access to a page for querying the sharing server provided by the register server and loads the page.
4: The browser and the register server perform Web Socket handshaking and establish a bidirectional channel.
5: The browser sends a sharing request to the register server via the bidirectional channel.
6: The register server forwards the sharing request to the sharing server via the bidirectional channel.
7: The sharing server returns response information to the register server via the bidirectional channel.
8: The register server forwards the response information to the browser via the bidirectional channel.
9: The browser creates a local Web RTC connection, acquires a Session Description Protocol (SDP) corresponding to the connection, and registers the SDP to the local Web RTC connection. Meanwhile, the browser requests the ICE server to acquire an NAT external network address port pair of the browser and/or a relay address port pair allocated to the browser by the ICE server.
10: The ICE server returns list information about the address port pairs (an NAT address and port, a relay IP and port and the like) to the browser.
11: The browser sends its own list information and a local SDP to the register server.
12: The register server sends the list information of the browser and the local SDP of the browser to the sharing server.
13: The content sharing server creates a local Web RTC connection corresponding to the browser, acquires an SDP thereof, and registers the SDP to the local Web RTC connection. Meanwhile, the sharing server requests the ICE server to acquire an external address port pair of an NAT device 1 and/or a relay address port pair allocated to the sharing server by the ICE server.
14: The ICE server returns the address port pair (the NAT address and port, the relay IP and port and the like) to the browser.
15: The sharing server sends its list information and the local SDP to the register server.
16: The register server sends the list information and SDP of the sharing server to the browser. Thus, a negotiation for Web RTC connection information between the browser and the sharing server is completed.
17: An ICE connectivity test is performed between the browser and the sharing server according to the known NAT address and port of the opposite party, and a first media channel is established.
18: The sharing server sends a needed video stream to the browser in accordance with a Secure Real-time Transport Protocol (SRTP) format of a Web RTC standard via a Web RTC connection channel between the sharing server and the browser.
19: The browser receives the Web RTC standard video stream and plays a video via an HTML5 video API.

In the embodiment, the sharing server and the register server perform Web Socket communication, perform peer-to-peer UPD communication with the browser, and perform Transmission Control Protocol (TCP) communication with the ICE server.

In another exemplary embodiment, picture uploading is achieved based on the browser supporting the Web RTC standard. The sharing server and the browser perform real-time audio/video communication by simulating browser RTC Peer Connection of the Web RTC standard and an affiliated data channel, ICE and media stream processing flows and messages, so as to save a picture stream sent by the browser. The specific steps are as follows.
1: The sharing server and the register server perform Web Socket handshaking and establish a Web Socket channel, in order to achieve bidirectional communication between the sharing server and the register server.
2: The sharing server reports a content sharing service state to the register server.
3: The browser has access to a page for querying a content sharing service list provided by the register server and loads the page.
4: The browser and the register server perform Web Socket handshaking and establish a Web Socket channel, in order to achieve bidirectional communication between the browser and the register server.
5: The browser sends a request for uploading a picture file to the sharing server to the register server via the Web Socket channel.
6: The register server forwards the request for uploading the picture file, sent by the browser, to the sharing server via the Web Socket channel.
7: The sharing server returns a request response, indicating that content uploading can be performed, to the register server via the Web Socket channel.
8: The register server forwards the request response returned by the sharing server to the browser via the Web Socket channel.
9: The browser creates a local Web RTC connection, and creates a local data channel by utilizing the connection. Then, an SDP corresponding to the connection and parameter information of a data channel are acquired, and are registered to the local Web RTC connection in a unified manner. Meanwhile, the browser requests the ICE server to acquire an NAT external network address port pair of the browser and/or a relay address port pair allocated to the browser by the ICE server.
10: The ICE server returns the address port pair to the browser.
11: The browser informs the register server of IP and port list information and SDP, the parameter information of the data channel and the like acquired by the browser from the ICE server.
12: The register server informs the sharing server of IP and port list information and SDP, the parameter information of the data channel and the like of the browser.
13: The content sharing server creates a local Web RTC connection corresponding to the browser, and creates a local data channel corresponding to the browser according to a data channel parameter of the browser. Then, an SDP thereof is acquired and registered to the local Web RTC connection. Meanwhile, the sharing server requests the ICE server to acquire an NAT external address port pair of the sharing server and/or a relay address port pair allocated to the sharing server by the ICE server.
14: The ICE server returns the address port pair to the sharing server.
15: The sharing server informs the register server of IP and port list information and a local SDP acquired by the sharing server from the ICE server.
16: The register server informs the browser of the IP and port list information and SDP of the sharing server.
17: An ICE connectivity test is performed between the browser and the sharing server according to the known IP and port list information of the opposite party, and a data channel is established.
18: The browser sends pictures, texts and the like needing to be uploaded to the sharing server in accordance with a Stream Control Transmission Protocol (SCTP) format of a Web RTC standard by utilizing the data channel.
19: The data channel of a content sharing server C receives and saves the picture file.

From the above descriptions, it can be seen that: the browser in the present disclosure supports the Web RTC standard, the sharing server and the browser can perform message interaction via the bidirectional channel established with the application server, after the sharing server and the browser acquire their own address information and the address information of the opposite party, the ICE connectivity test can be performed and the first media channel can be established, and the media resources can be shared between the sharing server and the browser via the first media channel. As a lot of browsers support the Web RTC standard, compared with the related art in which an NAT traversal mode is adopted, the present disclosure has the advantages that the application range of resource sharing between the server and the browser is expanded, and it is unnecessary to use a dedicated client to complete resource sharing; compared with a server relaying mode, the present disclosure occupies few resources of the application server when a media resource with a larger data volume is shared, and saves network resources; and when the first media channel between the sharing server and the browser is established unsuccessfully, the second media channel with the browser can be stilled established by taking the application server as the relay, and the media resources can be shared with the browser, thereby ensuring normal communication between the sharing server and the browser.

## Claims

1. A media resource sharing method, comprising:
acquiring, by a sharing server, a sharing request from a browser via a bidirectional channel established with an application server by the sharing server and the browser respectively (S101);
acquiring, by the sharing server, address information of the sharing server and address information of the browser according to the sharing request from the application server (S102);
performing, by the sharing server, an Interactive Connectivity Establishment, ICE, connectivity test with the browser according to the acquired address information of the sharing server and the acquired address information of the browser, and establishing a first media channel between the sharing server and the browser (S103); and
sharing media resources with the browser via the first media channel (S104).

2. The method as claimed in claim 1, wherein acquiring the address information of the sharing server and the address information of the browser according to the sharing request comprises:
returning a request response message to the application server via the bidirectional channel according to the sharing request, and forwarding, by the application server, the request response message to the browser via the bidirectional channel;
receiving a Network Access Translation, NAT, address and port of the browser acquired via the application server, and an NAT address and port of the sharing server; and
sending the NAT address and port of the sharing server to the browser via the bidirectional channel.

3. The method as claimed in claim 2, wherein performing the ICE connectivity test with the browser according to the acquired address information of the sharing server and the acquired address information of the browser and establishing the first media channel comprises:
performing the ICE connectivity test with the browser according to the acquired NAT address and port of the sharing server and the acquired NAT address and port of the browser, and establishing the first media channel.

4. The method as claimed in claim 2, wherein after performing the ICE connectivity test with the browser according to the acquired address information of the sharing server and the acquired address information of the browser and establishing the first media channel, the method further comprises:
establishing, when the first media channel is established unsuccessfully, a second media channel with the browser by taking the application server as a relay; and
sharing the media resources with the browser via the second media channel.

5. The method as claimed in claim 2, wherein acquiring, by the sharing server, the sharing request from the browser via the bidirectional channel comprises:
respectively establishing, by the sharing server and the browser, a bidirectional channel with the application server (S1011); and
acquiring the sharing request from the browser via the bidirectional channel respectively established by the sharing server and the browser with the application server (S1012).

6. The method as claimed in claim 1, wherein sharing the media resources with the browser via the first media channel comprises: sending the media resources to the browser via the first media channel, or receiving the media resources sent by the browser via the first media channel.

7. A media resource sharing server, comprising:
a request acquisition component (101), configured to acquire a sharing request from a browser via a bidirectional channel established with an application server by the sharing server and the browser respectively;
an address information acquisition component (102), configured to acquire address information of the sharing server and address information of the browser according to the sharing request from the application server;
a first establishment component (103), configured to perform an Interactive Connectivity Establishment, ICE, connectivity test with the browser according to the acquired address information of the sharing server and the acquired address information of the browser, and establish a first media channel between the sharing server and the browser; and
a first sharing component (104), configured to share media resources with the browser via the first media channel.

8. The sharing server as claimed in claim 7, wherein the address information acquisition component (102) comprises:
a return unit (1021), configured to return a request response message to the application server via the bidirectional channel according to the sharing request, so that the application server forward the request response message to the browser via the bidirectional channel;
a receiving unit (1022), configured to receive a Network Address Translation (NAT) address and port of the browser acquired via the application server, and an NAT address and port of the sharing server; and
a sending unit (1023), configured to send the NAT address and port of the sharing server to the browser via the bidirectional channel.

9. The sharing server as claimed in claim 8, wherein the first establishment component is configured to perform the ICE connectivity test with the browser according to the acquired NAT address and port of the sharing server and the acquired NAT address and port of the browser, and establish the first media channel.

10. The sharing server as claimed in claim 8, further comprising:
a second establishment component (105), configured to establish, when the first media channel is established unsuccessfully, a second media channel with the browser by taking the application server as a relay; and
a second sharing component (106), configured to share the media resources with the browser via the second media channel.

11. The sharing server as claimed in claim 8, wherein the request acquisition component (101) comprises:
a channel establishment unit (1011), configured to establish a bidirectional channel between the sharing server and the application server and a bidirectional channel between the browser and the application server; and
a request acquisition unit (1012), configured to acquire the sharing request from the browser via the bidirectional channel established between the sharing server and the application server and the bidirectional channel established between the browser and the application server.

12. The sharing server as claimed in claim 7, wherein the first sharing component is configured to send the media resources to the browser via the first medial channel or receive the media resources sent by the browser via the first media channel.

13. A media resource sharing system, comprising an application server, a browser and the sharing server as claimed in any one of claims 7 to 12, wherein
the application server is configured to send address information to the sharing server and the browser according to a sharing request; and the browser is configured to send the sharing request to the sharing server via a bidirectional channel, is further configured to cooperate with the sharing server to perform an Interactive Connectivity Establishment, ICE, connectivity test and establish a first media channel, and is further configured to share media resources with the sharing server via the first media channel.

14. The sharing system as claimed in claim 13, wherein the application server comprises a register server and an ICE server.

## Patentansprüche

1. Verfahren zur gemeinsamen Nutzung von Medienressourcen, umfassend:
Erfassen einer Mitbenutzunganforderung von einem Browser durch einen Mitbenutzungserver über einen bidirektionalen Kanal, der jeweils durch den Mitbenutzungserver und den Browser mit einem Anwendungsserver eingerichtet wurde (S101);
Erfassen von Adressinformationen des Mitbenutzungservers und Adressinformationen des Browsers durch den Mitbenutzungserver entsprechend der Mitbenutzunganforderung vom Anwendungsserver (S102);
durch den Mitbenutzungserver Durchführen eines ICE-Konnektivitätstests (ICE = Interactive Connectivity Establishment) mit dem Browser gemäß den erfassten Adressinformationen des Mitbenutzungservers und den erfassten Adressinformationen des Browsers und Einrichten eines ersten Medienkanals zwischen dem Mitbenutzungserver und dem Browser (S103); und
gemeinsame Nutzung von Medienressourcen mit dem Browser über den ersten Medienkanal (S104).

2. Verfahren nach Anspruch 1, wobei das Erfassen der Adressinformationen des Mitbenutzungservers und der Adressinformationen des Browsers gemäß der Mitbenutzunganforderung umfasst:
Zurückgeben einer Anforderungsantwortnachricht an den Anwendungsserver über den bidirektionalen Kanal gemäß der Mitbenutzunganforderung und Weiterleiten der Anforderungsantwortnachricht an den Browser über den bidirektionalen Kanal durch den Anwendungsserver;
Empfangen einer NAT-Adresse (NAT = Network Access Translation) und eines -Ports des Browsers, die über den Anwendungsserver erfasst wurden, sowie einer NAT-Adresse und eines -Ports des Mitbenutzungservers; und
Senden der NAT-Adresse und des -Ports des Mitbenutzungservers über den bidirektionalen Kanal an den Browser.

3. Verfahren nach Anspruch 2, wobei das Durchführen des ICE-Konnektivitätstests mit dem Browser gemäß den erfassten Adressinformationen des Mitbenutzungservers und den erfassten Adressinformationen des Browsers und Einrichten des ersten Medienkanals umfasst:
Durchführen des ICE-Konnektivitätstests mit dem Browser gemäß der erfassten NAT-Adresse und dem -Port des Mitbenutzungservers und der erfassten NAT-Adresse und dem - Port des Browsers und Einrichten des ersten Medienkanals.

4. Verfahren nach Anspruch 2, wobei nach dem Durchführen des ICE-Konnektivitätstests mit dem Browser gemäß den erfassten Adressinformationen des Mitbenutzungservers und den erfassten Adressinformationen des Browsers und Einrichten des ersten Medienkanals das Verfahren ferner umfasst:
Einrichten eines zweiten Medienkanals mit dem Browser, wenn der erste Medienkanal nicht erfolgreich eingerichtet wurde, indem der Anwendungsserver als Weitergabeeinrichtung verwendet wird; und
gemeinsame Nutzung der Medienressourcen mit dem Browser über den zweiten Medienkanal.

5. Verfahren nach Anspruch 2, wobei das Erfassen der Mitbenutzunganforderung vom Browser über den bidirektionalen Kanal durch den Mitbenutzungserver umfasst:
jeweils Einrichten eines bidirektionalen Kanals mit dem Anwendungsserver durch den Mitbenutzungserver und den Browser (S1011); und
Erfassen der Mitbenutzunganforderung vom Browser über den bidirektionalen Kanal, der jeweils durch den Mitbenutzungserver und den Browser mit dem Anwendungsserver eingerichtet wurde (S1012).

6. Verfahren nach Anspruch 1, wobei die gemeinsame Nutzung der Medienressourcen mit dem Browser über den ersten Medienkanal umfasst: Senden der Medienressourcen an den Browser über den ersten Medienkanal oder Empfangen der durch den Browser über den ersten Medienkanal gesendeten Medienressourcen.

7. Mitbenutzungserver für Medienressourcen, umfassend:
eine Anforderungserfassungskomponente (101), die eingerichtet ist, um eine Mitbenutzunganforderung von einem Browser über einen bidirektionalen Kanal zu erfassen, der mit einem Anwendungsserver jeweils durch den Mitbenutzungserver und den Browser eingerichtet wurde;
eine Adressinformationserfassungskomponente (102), die eingerichtet ist, um Adressinformationen des Mitbenutzungservers und Adressinformationen des Browsers gemäß der Mitbenutzunganforderung vom Anwendungsserver zu erfassen;
eine erste Einrichtungskomponente (103), die eingerichtet ist, um ICE-Konnektivitätstests mit dem Browser gemäß den erfassten Adressinformationen des Mitbenutzungservers und den erfassten Adressinformationen des Browsers durchzuführen und einen ersten Medienkanal zwischen dem Mitbenutzungserver und dem Browser einzurichten; und
eine erste Mitbenutzungkomponente (104), die eingerichtet ist, um Medienressourcen gemeinsam mit dem Browser über den ersten Medienkanal zu nutzen.

8. Mitbenutzungserver nach Anspruch 7, wobei die Adressinformationserfassungskomponente (102) umfasst:
eine Rückgabeeinheit (1021), die eingerichtet ist, um gemäß der Mitbenutzunganforderung eine Anforderungsantwortnachricht über den bidirektionalen Kanal an den Anwendungsserver zurückzugeben, sodass der Anwendungsserver die Anforderungsantwortnachricht über den bidirektionalen Kanal an den Browser weiterleitet;
eine Empfangseinheit (1022), die eingerichtet ist, um eine NAT-Adresse und einen -Port des Browsers, die über den Anwendungsserver erfasst wurden, und eine NAT-Adresse und einen -Port des Mitbenutzungservers zu empfangen; und
eine Sendeeinheit (1023), die eingerichtet ist, um die NAT-Adresse und den -Port des Mitbenutzungservers über den bidirektionalen Kanal an den Browser zu senden.

9. Mitbenutzungserver nach Anspruch 8, wobei die erste Einrichtungskomponente eingerichtet ist, um den ICE-Konnektivitätstest mit dem Browser gemäß der erfassten NAT-Adresse und dem -Port des Mitbenutzungservers und der erfassten NAT-Adresse und dem - Port des Browsers durchzuführen und den ersten Medienkanal einzurichten.

10. Mitbenutzungserver nach Anspruch 8, ferner umfassend:
eine zweite Einrichtungskomponente (105), die eingerichtet ist, um einen zweiten Medienkanal mit dem Browser einzurichten, wenn der erste Medienkanal nicht erfolgreich eingerichtet wurde, indem der Anwendungsserver als Weitergabeeinrichtung verwendet wird; und
eine zweite Mitbenutzungkomponente (106), die eingerichtet ist, um die Medienressourcen über den zweiten Medienkanal gemeinsam mit dem Browser zu nutzen.

11. Mitbenutzungserver nach Anspruch 8, wobei die Erfassungskomponente (101) umfasst:
eine Kanaleinrichtungseinheit (1011), die eingerichtet ist, um einen bidirektionalen Kanal zwischen dem Mitbenutzungserver und dem Anwendungsserver und einen bidirektionalen Kanal zwischen dem Browser und dem Anwendungsserver einzurichten; und
eine Anforderungserfassungseinheit (1012), die eingerichtet ist, um die Mitbenutzunganforderung vom Browser über den zwischen dem Mitbenutzungserver und dem Anwendungsserver eingerichteten bidirektionalen Kanal und den zwischen dem Browser und dem Anwendungsserver eingerichteten bidirektionalen Kanal zu erfassen.

12. Mitbenutzungserver nach Anspruch 7, wobei die erste Mitbenutzungkomponente eingerichtet ist, um die Medienressourcen über den ersten Medienkanal an den Browser zu senden oder die durch den Browser über den ersten Medienkanal gesendeten Medienressourcen zu empfangen.

13. System zur gemeinsamen Nutzung von Medienressourcen, umfassend einen Anwendungsserver, einen Browser und den Mitbenutzungserver nach einem der Ansprüche 7 bis 12, wobei
der Anwendungsserver eingerichtet ist, um Adressinformationen gemäß einer Mitbenutzunganforderung an den Mitbenutzungserver und den Browser zu senden; und der Browser eingerichtet ist, um die Mitbenutzunganforderung über einen bidirektionalen Kanal an den Mitbenutzungserver zu senden, ferner eingerichtet ist, um mit dem Mitbenutzungserver zusammenzuwirken, um einen ICE-Konnektivitätstest durchzuführen und einen ersten Medienkanal einzurichten, und ferner eingerichtet ist, um Medienressourcen gemeinsam mit dem Mitbenutzungserver über den ersten Medienkanal zu nutzen.

14. Mitbenutzungsystem nach Anspruch 13, wobei der Anwendungsserver einen Registerserver und einen ICE-Server umfasst.

## Revendications

1. Procédé de partage de ressources multimédia, comprenant:
acquérir, par un serveur de partage, une demande de partage d'un navigateur par le biais d'un canal bidirectionnel établi avec un serveur d'application par le serveur de partage et par le navigateur, respectivement (S101) ;
acquérir, par le serveur de partage, des informations d'adressage du serveur de partage et des informations d'adressage du navigateur, conformément à la demande de partage du serveur d'application (S102) ;
effectuer, par le serveur de partage, un test de connectivité d'établissement de connectivité interactive, ICE, avec le navigateur en fonction des informations d'adressage acquises du serveur de partage et des informations d'adressage acquises du navigateur et établir un premier canal multimédia entre le serveur de partage et le navigateur (S103) ; et
partager des ressources multimédia avec le navigateur par le biais du premier canal multimédia (S104).

2. Procédé selon la revendication 1, dans lequel l'acquisition des informations d'adressage du serveur de partage et des informations d'adressage du navigateur, conformément à la demande de partage, comprend:
renvoyer un message de demande de réponse au serveur d'application par le biais du canal bidirectionnel conformément à la demande de partage et transférer, par le serveur d'application, le message de réponse à la demande au navigateur par le biais du canal bidirectionnel ;
recevoir une adresse et un port de traduction d'accès au réseau, NAT, du navigateur acquis par le biais du serveur d'application, ainsi qu'une adresse et un port de NAT du serveur de partage ; et
envoyer l'adresse et le port de NAT du serveur de partage au navigateur par le biais du canal bidirectionnel.

3. Procédé selon la revendication 2, dans lequel l'exécution du test de connectivité d'ICE avec le navigateur, en fonction des informations d'adressage acquises du serveur de partage et des informations d'adressage acquises du navigateur, et l'établissement du premier canal multimédia comprenant:
effectuer le test de connectivité d'ICE avec le navigateur, en fonction de l'adresse et du port de NAT acquis du serveur de partage et de l'adresse et du port de NAT acquis du navigateur et établir le premier canal multimédia.

4. Procédé selon la revendication 2, dans lequel, après avoir effectué le test de connectivité d'ICE avec le navigateur, en fonction des informations d'adressage acquises du serveur de partage et des informations d'adressage acquises du navigateur, et établi le premier canal multimédia, le procédé comprend en outre:
établir, lorsque le premier canal multimédia est établi sans succès, un second canal multimédia avec le navigateur en prenant le serveur d'application comme relais ; et
partager les ressources multimédia avec le navigateur par le biais du second canal multimédia.

5. Procédé selon la revendication 2, dans lequel l'acquisition, par le serveur de partage, de la demande de partage provenant du navigateur par le biais du canal bidirectionnel comprend:
établir respectivement, par le serveur de partage et par le navigateur, un canal bidirectionnel avec le serveur d'application (S1011) ; et
acquérir la demande de partage du navigateur par le biais du canal bidirectionnel établi respectivement par le serveur de partage et par le navigateur avec le serveur d'application (S1012).

6. Procédé selon la revendication 1, dans lequel le partage des ressources multimédia avec le navigateur par le biais du premier canal multimédia comprend : l'envoi des ressources multimédia au navigateur par le biais du premier canal multimédia ou la réception des ressources multimédia envoyées par le navigateur par le biais du premier canal multimédia.

7. Serveur de partage de ressources multimédia, comprenant :
un composant d'acquisition de demande (101), configuré pour acquérir une demande de partage d'un navigateur par le biais d'un canal bidirectionnel établi avec un serveur d'application par le serveur de partage et par le navigateur, respectivement ;
un composant d'acquisition d'informations d'adressage (102), configuré pour acquérir des informations d'adressage du serveur de partage et des informations d'adressage du navigateur, en fonction de la demande de partage du serveur d'application ;
un premier composant d'établissement (103), configuré pour effectuer un test de connectivité d'ICE (établissement de connectivité interactive) avec le navigateur en fonction des informations d'adressage acquises du serveur de partage et des informations d'adressage acquises du navigateur et pour établir un premier canal multimédia entre le serveur de partage et le navigateur ; et
un premier composant de partage (104), configuré pour partager des ressources multimédia avec le navigateur par le biais du premier canal multimédia.

8. Serveur de partage selon la revendication 7, dans lequel le composant d'acquisition d'informations d'adressage (102) comprend :
une unité de retour (1021), configurée pour renvoyer un message de réponse à la demande au serveur d'application par le biais du canal bidirectionnel, conformément à la demande de partage, de sorte que le serveur d'application transmette le message de réponse à la demande par le biais du canal bidirectionnel ;
une unité de réception (1022), configurée pour recevoir une adresse et un port de traduction d'adresses de réseau (NAT) du navigateur acquis par le biais du serveur d'application, ainsi qu'une adresse et un port de NAT du serveur de partage ; et
une unité d'envoi (1023), configurée pour envoyer l'adresse et le port de NAT du serveur de partage au navigateur par le biais du canal bidirectionnel.

9. Serveur de partage selon la revendication 8, dans lequel le premier composant d'établissement est configuré pour effectuer le test de connectivité d'ICE avec le navigateur en fonction de l'adresse et du port de NAT acquis du serveur de partage et de l'adresse et du port de NAT acquis du navigateur et pour établir le premier canal multimédia.

10. Serveur de partage selon la revendication 8, comprenant en outre :
un second composant d'établissement (105), configuré pour établir, lorsque le premier canal multimédia est établi sans succès, un second canal multimédia avec le navigateur, en prenant le serveur d'application comme relais ; et
un second composant de partage (106), configuré pour partager les ressources multimédia avec le navigateur par le biais du second canal multimédia.

11. Serveur de partage selon la revendication 8, dans lequel le composant d'acquisition de demande (101) comprend :
une unité d'établissement de canal (1011), configurée pour établir un canal bidirectionnel entre le serveur de partage et le serveur d'application d'une part et un canal bidirectionnel entre le navigateur et le serveur d'application d'autre part ; et
une unité d'acquisition de demande (1012), configurée pour acquérir la demande de partage du navigateur par le biais du canal bidirectionnel, établi entre le serveur de partage et le serveur d'application d'une part et du canal bidirectionnel, établi entre le navigateur et le serveur d'application d'autre part.

12. Serveur de partage selon la revendication 7, dans lequel le premier composant de partage est configuré pour envoyer les ressources multimédia au navigateur par le biais du premier canal multimédia ou pour recevoir les ressources multimédia envoyées par le navigateur par le biais du premier canal multimédia.

13. Système de partage de ressources multimédia, comprenant un serveur d'application, un navigateur et le serveur de partage selon l'une quelconque des revendications 7 à 12, dans lequel
le serveur d'application est configuré pour envoyer des informations d'adressage au serveur de partage et au navigateur, conformément à une demande de partage ; et le navigateur est configuré pour envoyer la demande de partage au serveur de partage par le biais d'un canal bidirectionnel, est en outre configuré pour coopérer avec le serveur de partage afin d'effectuer un test de connectivité de l'établissement de connectivité interactive ICE et d'établir un premier canal multimédia et est également configuré pour partager des ressources multimédia avec le serveur de partage par le biais du premier canal multimédia.

14. Système de partage selon la revendication 13, dans lequel le serveur d'application comprend un serveur de registres et un serveur d'ICE.
